# EUROPÄISCHE PATENTSCHRIFT

(11) **EP 4 126 742 B1**
(45) Veröffentlichungstag und Bekanntmachung des Hinweises auf die Patenterteilung: **06.09.2023**
(21) Anmeldenummer: 21727380.4
(22) Anmeldetag: 12.05.2021
(51) Int. Cl.: B66C 1/66, F16G 15/08, F16G 15/12, F16G 15/00, F16G 13/12

(54) **ANSCHLAGPUNKT**
ATTACHMENT POINT
POINT D'ATTACHE

(30) Priorität: 20.05.2020 DE 202020102887 U
(43) Veröffentlichungstag der Anmeldung: 08.02.2023
(73) Patentinhaber: J.D. Theile GmbH & Co. KG, D-58239 Schwerte (DE)
(72) Erfinder: MÜER, Bernd, 58239 Schwerte (DE)
(74) Vertreter: Haverkamp Patentanwälte PartG mbB
(86) Internationale Anmeldenummer: PCT/EP2021/062661
(87) Internationale Veröffentlichungsnummer: WO 2021/233757

(56) Entgegenhaltungen:
- DE-A1-102006 052 986
- DE-U1-202005 019 359
- DE-U1-202016 004 077

## Beschreibung

Die Erfindung betrifft einen Anschlagpunkt zum Festlegen an einem festzulegenden und/oder handzuhabenden Gegenstand, umfassend ein Anschlussmittel zum Anschließen des Anschlagpunktes an einen festzulegenden und/oder handzuhabenden Gegenstand mit einen an einen Grundkörper angeschlossenen Ösenbogen und eine in den Ösenbogen eingehängte Anschlussöse zum Anschließen eines Anschlag- oder Zurrmittels, welche Anschlussöse in ihrem in den Ösenbogen eingehängten Bogen einen kleineren Radius aufweist als in ihrem anderen Bogen und welche Anschlussöse zwei einander bezüglich ihrer Längsachse gegenüberliegende, in den von der Anschlussöse eingefassten Innenraum abragende Teilungselemente trägt.

Derartige Anschlagpunkte werden typischerweise zum Heben von Gegenständen verwendet. Angeschlossen werden die Anschlagpunkte mit ihrem Anschlussmittel, typischerweise als Schraubbolzen ausgeführt, an den zu hebenden oder festzulegenden Gegenstand. In vielen Fällen ist ein solcher Anschlagpunkt ausgelegt, damit bei Anliegen einer durch ein in die Anschlussöse eingehängtes Hebezeug sich die Anschlussöse entsprechend der darauf wirkenden Zugrichtung ausrichtet. Bei einem solchen Anschlusspunkt ist der den Ösenbogen tragende Grundkörper als Oberteil ausgebildet, das gegenüber einem das oder die Anschlussmittel tragenden Unterteil drehbar ist. Dieselben Eigenschaften werden auch bei einem Anschlagpunkt gewünscht, wenn dieser zum Verzurren eines Gegenstandes eingesetzt wird, grundsätzlich auch, wenn der Anschlagpunkt nicht als Anschlagwirbel mit einem gegenüber dem Unterteil drehbaren Oberteil ausgeführt ist.

In Abhängigkeit von den jeweiligen Gegebenheiten können auf einen solchen Anschlagpunkt die angreifenden Zugbelastungen auch aus Querrichtungen wirken. Um einem Verklanken der Anschlussöse innerhalb des Ösenbogens des Grundkörpers entgegenzuwirken, wird in DE 10 2006 052 986 B4 vorgeschlagen, den mit dem kleineren Radius ausgeführten Bogen der Anschlussöse in den Ösenbogen einzuhängen. Aufgrund des geringeren Radius dieses Bogens kann eine Zwei-Punkt-Abstützung des Bogens innerhalb des Ösenbogens weitestgehend vermieden werden, sodass die Anschlussöse mit dem Ösenbogen entsprechend besser scharnieren kann. Zusätzlich ist bei diesem vorbekannten Anschlusspunkt vorgesehen, dass von jedem die Bögen verbindenden Schenkel ein Teilungselement in den von der Anschlussöse eingefassten Innenraum abragt. Die Teilungselemente unterteilen den Innenraum in einen Bereich, in dem der Ösenbogen angeordnet ist, und in einen weiteren Bereich, in dem ein Anschlag- oder Zurrmittel eingehängt werden kann. Die lichte Weite zwischen den Teilungselementen ist so bemessen, dass der Ösenbogen nicht hindurch passt. Dadurch ist sichergestellt, dass der Bogen mit dem geringeren Radius in seiner mit dem Ösenbogen des Grundkörpers scharnierenden Stellung verbleibt. Die Teilungselemente begrenzen die Eintauchtiefe der Anschlussöse in den Ösenbogen.

Aus DE 20 2016 004 077 U1 ist ein Anschlagwirbel mit einer Hakenöse bekannt, die zwei nach außen zeigende Verdickungen an den geraden Schenkeln aufweist. Die Verdickungen sind größer als die Öffnung des an das Oberteil angeformten Ösenbogens. Diese Verdickungen haben dieselbe Aufgabe wie die Teilungselemente des in DE 10 2006 052 986 B4 beschriebenen Anschlusspunktes.

Auch wenn mit diesem vorbekannten Anschlagpunkt bereits eine deutliche Verbesserung gegenüber älteren Anschlagpunkten hinsichtlich einer Querbelastbarkeit erreicht ist, wäre es wünschenswert, wenn die Anschlussöse gegenüber dem Ösenbogen auch bei ungünstigen Winkellagen der Anschlussöse gegenüber dem Ösenbogen verklankungsfrei wäre. Damit liegt der Erfindung die Aufgabe zugrunde, ausgehend von diesem vorstehend diskutierten Stand der Technik, einen solchen hinsichtlich seiner Verklankungsfreiheit verbesserten Anschlagpunkt vorzuschlagen.

Gelöst wird diese Aufgabe durch einen eingangs genannten, gattungsgemäßen Anschlagpunkt, bei dem die Anschlussöse bezüglich ihrer Mittelfaser den Teilungselementen gegenüberliegend jeweils außenseitig einen abragenden Bewegungsbegrenzungsanschlag zum Begrenzen der Eintauchtiefe der Anschlussöse in den Ösenbogen zusammen mit den innenseitig abragenden, ebenfalls als Bewegungsbegrenzungsanschläge ausgebildeten Teilungselementen trägt, durch welche Bewegungsbegrenzungsanschläge der Maximaldurchmesser des die Bewegungsbegrenzungsanschläge tragenden Abschnittes der Anschlussöse größer ist als die lichte Weite des Ösenbogens ist, wobei die die Bewegungsbegrenzungsanschläge bildende Kontur geformt ist, damit zwischen den Bewegungsbegrenzungsanschlägen und dem Ösenbogen in der Anschlaganordnung im Wesentlichen nur ein Linienkontakt vorhanden ist.

Dieser Anschlusspunkt verfügt neben den innenseitig abragenden Teilungselementen der Anschlussöse auch über außenseitig abragende Bewegungsbegrenzungsanschläge. Diese liegen den Teilungselementen bezüglich der Mittelfaser der Anschlussöse den Teilungselementen gegenüber und sind dergestalt angeordnet, dass in Zusammenwirkung mit den Teilungselementen die Eintauchtiefe der Anschlussöse in den Ösenbogen begrenzt ist. Dabei wirken die Teilungselemente ebenfalls als Bewegungsbegrenzungsanschläge. Jedes ein in den Innenraum abragendes und ein außenseitig abragendes Bewegungsbegrenzungsanschlag aufweisendes Bewegungsbegrenzungsanschlagpaar ist in Bezug auf die Anschlussöse angeordnet, damit die Anschlussöse ungehindert gegenüber den in seinen Bogen mit dem geringeren Radius eingehängten Ösenbogen scharnieren kann. Die Bewegungsbegrenzungsanschläge sind somit angeordnet, dass die Eintauchtiefe der Anschlussöse derart begrenzt ist, dass kein gerader Schenkelabschnitt in den Ösenbogen eingreift, jedenfalls nicht in einer solchen Länge oder Anordnung, dass sich zwischen der Anschlussöse und dem Ösenbogen eine stabile Zweipunktabstützung einstellen könnte. Typischerweise befinden sich die Bewegungsbegrenzungsanschlagpaare im Endabschnitt der Schenkel an ihrem zu dem Bogen mit dem geringeren Radius weisenden Ende.

Zudem zeichnet sich dieser Anschlusspunkt dadurch aus, dass in der Anschlagstellung zwischen einem oder beiden Bewegungsbegrenzungsanschlägen eines Bewegungsbegrenzungsanschlagpaares und der inneren Mantelfläche des Ösenbogens im Wesentlichen nur ein Linienkontakt gegeben ist. Ösenbögen von derartigen Anschlagpunkten sind zum Bereitstellen der gewünschten Scharnierbarkeit innenseitig gerundet ausgeführt. Somit befindet sich die Ebene mit dem geringsten Durchmesser der Ösenöffnung des Ösenbogens in der Mittellängsebene desselben. Durch die vorbeschriebene Maßnahme ist sichergestellt, dass die beiden gegeneinander bewegbaren Teile - die Anschlussöse und der Ösenbogen - nicht durch einen flächigen Reibschluss miteinander verklanken können. Dieses ist kombiniert mit der vorbeschriebenen Maßnahme, dass jeweils nur gekrümmte Oberflächen im Anschlagfalle aneinander anliegen, dafür verantwortlich, dass bereits bei Anliegen einer nur geringen Zugkraft die Anschlussöse aus jeder Querstellung leicht befreit werden kann, sodass die Anschlussöse bei Anliegen einer bereits geringen Zugkraft mit der Innenseite ihres an dem Ösenbogen scharnierenden Bogens zur Anlage an diesem gebracht wird.

Gemäß einer Ausgestaltung ist die innere Mantelfläche des in den Ösenbogen eingehängten Bogens der Anschlussöse bis zu der Kontur der Bewegungsbegrenzungsanschläge gerundet ausgeführt, so dass die Innenseite dieses Bogens unter Fortsetzung der Krümmung in die Kontur der Bewegungsbegrenzungsanschläge übergeht.

Von besonderem Vorteil ist die Auslegung eines solchen Anschlagpunktes, wenn der Grundkörper mit dem Ösenbogen das Oberteil eines Anschlagwirbels bildet, das gegenüber einem das oder die Anschlussmittel tragenden Unterteil drehbar ist. Dann orientiert sich nicht nur die Neigung der Anschlussöse gegenüber dem Ösenbogen in die Richtung der einwirkenden Zugkraft, sondern auch in Umfangsrichtung. Dadurch ist die Sicherheit dieses Anschlagpunktes gegenüber vorbekannten vor allem bei Anliegen von Querkräften verbessert. Die Drehbarkeit des Oberteils gegenüber dem Unterteil kann durch geeignete Lager, wie beispielsweise ein Gleitlager oder auch unter Zwischenschaltung von ein oder mehreren Wälzkörperreihen bereitgestellt sein.

In einer gewichtsoptimierten Ausgestaltung ist die Querschnittsfläche in den jeweiligen Abschnitten der Anschlussöse, in denen ein Bewegungsbegrenzungsanschlagpaar angeordnet ist, gegenüber den daran angrenzenden Abschnitten der Anschlussöse nicht, jedenfalls nicht nennenswert größer. Dieses bedeutet, dass in dem Bereich der jeweiligen Bewegungsbegrenzungsanschlagpaare in Querrichtung zu der Erstreckung derselben die Anschlussöse eine reduzierte Materialstärke aufweist. In einer bevorzugten Ausgestaltung werden die innenseitig abragenden Teilungselemente als Bewegungsbegrenzungsanschläge und die außenseitig abragenden Bewegungsbegrenzungsanschläge durch einen einzigen Umformvorgang, der quer zur Ebene der Anschlussöse vorgenommen wird, aus der umfänglich typischerweise eine kreisrunde Querschnittfläche aufweisenden Anschlussöse erzeugt. Dann weist die Anschlussöse auch in diesen Abschnitten dieselbe Querschnittsfläche auf, wie in den angrenzenden, nicht umgeformten Abschnitten. Vorzugsweise gehen die Bewegungsbegrenzungsanschläge eines Bewegungsbegrenzungsanschlusspaares über die Breite der diese tragenden Abschnitte der Anschlussöse in diejenigen der außenseitig abragenden Bewegungsbegrenzungsanschläge über. Die Querschnittsgeometrie kann bei einem solchen Übergang von innenseitigem Bewegungsbegrenzungsanschlag zu dem außenseitigen Bewegungsbegrenzungsanschlag über den Querschnitt dieses Abschnittes in dem Anschlussglied gleich sein. Dadurch wird die Anschlussöse nicht geschwächt, da das Anschlussglied nur in Richtung seiner Längserstreckung durch die anliegende Zugkraft beansprucht wird und aufgrund der vorbeschriebenen Maßnahmen, dass sich die Anschlussöse gegebenenfalls gemeinsam mit einem drehbaren Oberteil ohne Weiteres in Zugkraft ausrichtet, nicht in einer Richtung quer zu der Ebene der Anschlussöse.

Die die Bögen der Anschlussöse verbindenden Schenkel sind gemäß einer Ausgestaltung gerade ausgeführt. In einer anderen Ausgestaltung sind die Schenkel zumindest in einem Abschnitt S-förmig geformt.

Die Erfindung ist nachfolgend unter Bezugnahme auf die beiliegenden Figuren anhand eines Ausführungsbeispiels beschreiben. Es zeigen:
- **Fig. 1:**: Eine Seitenansicht eines erfindungsgemäßen Anschlusspunktes,
- **Fig. 2:**: eine Querschnittdarstellung durch die Anschlussöse des Anschlusspunktes der Figur 1 entlang der Linie A-B und
- **Fig. 3:**: eine zum Teil geschnittene Seitenansicht des Anschlusspunktes der Figur 1 mit seiner gegenüber der Ausrichtung in Figur 1 verstellten Anschlussöse.

Ein Anschlagpunkt 1 dient zum Anschluss an einen Gegenstand, damit dieser gehandhabt werden kann, das heißt: Je nach Anwendung angehoben, festgezurrt oder dergleichen. Der Anschlagpunkt 1 verfügt über ein Unterteil 2 und ein Oberteil 3. Das Oberteil 3 ist gegenüber dem Unterteil 2 drehbar gelagert. An das Unterteil ist ein Schraubbolzen 4 angeschlossen, dessen Gewindeabschnitt 5 zum Anschließen des Anschlagpunktes 1 an einen handzuhabenden Gegenstand dient, indem dieser in eine entsprechend vorbereitete Innengewindebohrung des Gegenstandes eingeschraubt wird. Das Oberteil 3 trägt einen Ösenbogen 6, der zusammen mit einem Teil des Grundkörpers 7 des Oberteils 3 eine Öse bildet. In den Ösenbogen 6 ist eine Anschlussöse 8 eingehängt. Die Anschlussöse 8 dient dem Zweck, daran ein Hebe- oder Zurrmittel, wie beispielsweise einen Kranhaken, ein Seil, ein Gurt oder dergleichen anzuschließen. Die Anschlussöse 8 ist asymmetrisch bezüglich ihrer Längserstreckung ausgeführt und verfügt über einen ersten Bogen 9 mit größerem Radius und einen zweiten Bogen 10 mit kleinerem Radius. Die Anschlussöse 8 ist mit ihrem Bogen 10 mit kleinerem Radius in den Ösenbogen 6 des Oberteils 3 eingehängt und kann an diesem scharnieren. Die die beiden Bögen 9, 10 verbindenden Schenkel 11, 11.1 sind bei dem dargestellten Ausführungsbeispiel gerade ausgeführt und gegeneinander geneigt, wodurch der durch die Anschlussöse 8 eingefasste Innenraum I sich in Richtung zu dem Bogen 10 hin verjüngt.

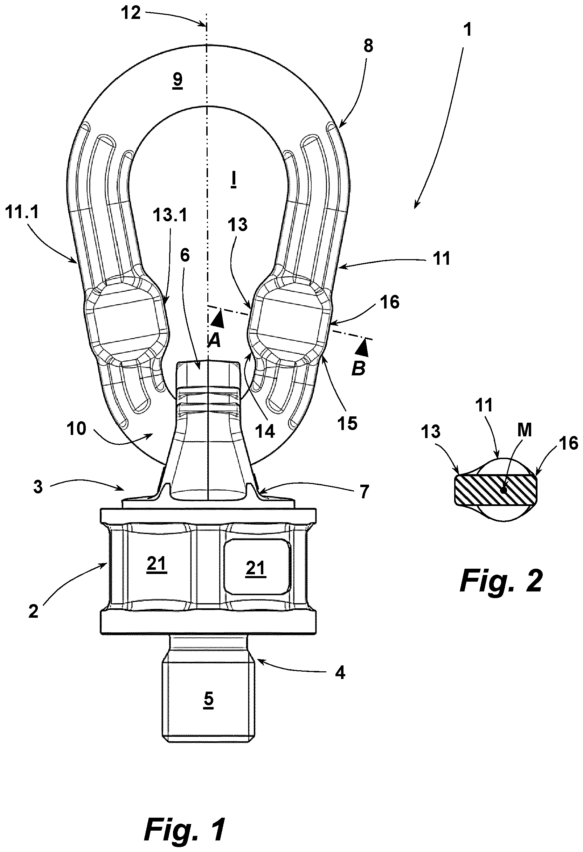

Die Anschlussöse 8 ist spiegelsymmetrisch zu der in Figur 1 mit dem Bezugszeichen 12 gekennzeichneten Mittellängsebene ausgeführt. Die Mittellängsebene 12 ist in dieser Figur anhand ihrer Spur kenntlich gemacht. Aus diesem Grunde sind die beiden Schenkel 11, 11.1 identisch aufgebaut. Im Folgenden ist der Schenkel 11 näher beschrieben. Dieselben Ausführungen gelten gleichermaßen für den Schenkel 11.1.

Die Anschlussöse 8 weist grundsätzlich eine kreisförmige Querschnittsgeometrie in ihren Bögen 9, 10 und ihren Schenkeln 11, 11.1 auf. Der Schenkel 11 trägt im Bereich seines zu dem Bogen 10 mit dem geringeren Radius weisenden Endabschnitt ein nach innen in den Innenraum I abragendes Teilungselement 13, dessen zu dem Bogen 10 weisende Kontur einen Bewegungsbegrenzungsanschlag 14 bildet. Das Teilungselement 13 unterteilt zusammen mit dem Teilungselement 13.1 des Schenkels 11.1 den Innenraum I der Anschlussöse 8 in denjenigen Bereich, in dem der Ösenbogen 6 scharniert, und in den hinsichtlich seiner lichten Weite größeren Bereich, in den ein Kranhaken oder ein anderweitiges Zurrmittel eingreift bzw. anzuschließen ist. Dem Teilungselement 13 ist bezüglich der virtuellen Mittellängsfaser M des Schenkels 11, die in Figur 2 schematisiert eingezeichnet ist, außenseitig gegenüberliegend ein weiterer Bewegungsbegrenzungsanschlag 15 durch einen entsprechend ausgeformten Vorsprung 16 bereitgestellt (siehe auch Figur 2). Bei dem dargestellten Ausführungsbeispiel sind das Teilungselement 13 und der Vorsprung 16 durch eine beidseitige Abplattung des Schenkels 11, wie in der Schnittdarstellung der Figur 2 erkennbar, bereitgestellt. Diese Abplattung des Schenkels 11 ist symmetrisch zur Mittelebene in der Ebene der Anschlussöse 8. Durch die Abplattung ist die Querschnittsfläche gegenüber den im Querschnitt runden Abschnitten des Schenkels 11 nicht reduziert. Im Bereich der die beiden abragenden Strukturen 13, 16 bildenden Abplattung entspricht die Querschnittsfläche der Querschnittsfläche in den im Querschnitt runden Abschnitten des Schenkels 11.

Die Konturen des Teilungselementes 13 sowie des Vorsprunges 16, die die Bewegungsbegrenzungsanschläge 14, 15 bilden, sind gerundet ausgeführt, und zwar bei dem dargestellten Ausführungsbeispiel ohne zwischengeschaltete gerade Abschnitte, jedenfalls keine solchen, die in dem beschriebenen Zusammenhang eine Rolle spielen würden. Der Radius des konkaven Abschnittes des Bewegungsbegrenzungsanschlages 14 geht in den Radius des Bogens 10 über.

Beide Bewegungsbegrenzungsanschläge 14, 15 weisen zu dem Bogen 10 hin eine gestreckte S-förmige Kontur auf. Der Betrag, mit dem das Teilungselement 13 in den Innenraum I vorspringt, ist bei dem dargestellten Ausführungsbeispiel um ein Mehrfaches größer als der Betrag, mit dem der Vorsprung 16 von der Mantelfläche der angrenzenden zylindrischen Mantelfläche des Schenkels 11 vorspringt.

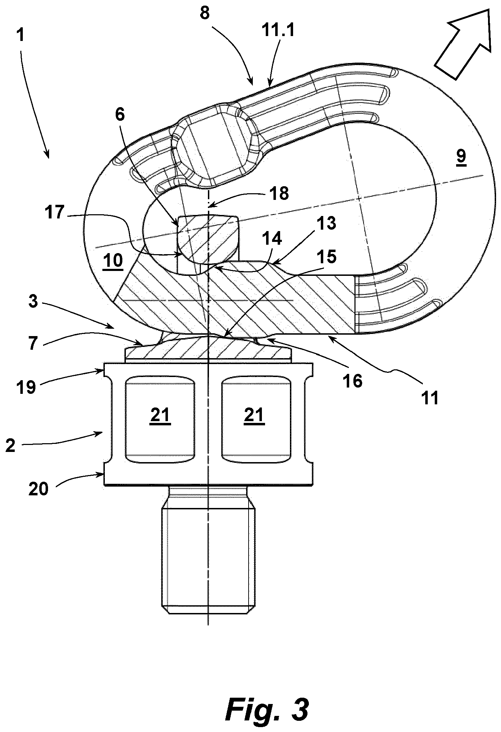

Figur 3 zeigt den Anschlagpunkt 1 in einer Schnittdarstellung im Bereich seines Ösenbogens 6. Aus dieser Darstellung ist erkennbar, dass der Ösenbogen 6 an seiner in die Ösenöffnung weisenden Seite 17 gerundet ausgeführt ist. Der Radius ist an den Durchmesser des Bogens 10 der Anschlussöse 8 angepasst, damit beide Elemente bestimmungsgemäß miteinander scharnieren können. Die Ösenöffnung des Ösenbogens 6 wird in den Figuren unterseitig durch den oberen Abschluss des Grundkörpers 7 begrenzt. Auch an dieser Seite der Ösenöffnung reduziert sich die lichte Weite derselben zur Mittellängsebene 18 des Ösenbogens 6 hin.

Figur 3 zeigt die mit ihrem Bogen 10 in den Ösenbogen 6 eingehängte Anschlussöse 8 in einer Stellung, in der diese gegenüber ihrer in Figur 1 gezeigten Stellung um den bei dem Anschlagpunkt 1 maximal zugelassenen Verschwenkbetrag verschwenkt ist. Dieser beträgt etwa 80°. Begrenzt ist die Verschwenkbarkeit durch die zugelassene maximale Eintauchtiefe des Schenkels 11 in die Ösenöffnung des Ösenbogens 6 durch die beiden Bewegungsbegrenzungsanschläge 14, 15. Der Bewegungsbegrenzungsanschlag 14 kontaktiert mit seinem konvex geformten Abschnitt in der in Figur 3 gezeigten Anschlagstellung die gekrümmte innere Mantelfläche 17 des oberen Teils des Ösenbogens 6, während der Bewegungsbegrenzungsanschlag 15 ebenfalls mit seiner konvexen Außenkontur an der Begrenzung der Ösenöffnung durch die Oberseite des Grundkörpers 7 anschlägt. Diese Anschlaganlage ist umfänglich. Durch die Anlage der gekrümmten Konturen ist die Eintauchtiefe des Schenkels 11 in die Ösenöffnung des Ösenbogens 6 durch einen Linienkontakt begrenzt.

Wirkt auf die Anschlussöse 8 des Anschlusspunktes 1 eine Zugkraft, wie beispielsweise in Figur 3 durch den Blockpfeil dargestellt, wird diese ohne weiteres aus ihrer in Figur 3 gezeigten Stellung herausgezogen, sodass die Innenseite des Bogens 10 an dem Ösenbogen 6 zur Anlage gelangt und beide Elemente bestimmungsgemäß miteinander scharnieren können. Auch bei einer auf die Anschlussöse 8 wirkenden Zugkraft, die an dem Bogen 9 senkrecht zur Zeichenebene angreift, richtet sich die Anschlussöse 8 in Richtung der anliegenden Zugkraft ohne weiteres aus. Bei einer solchen Kraft wird das Oberteil 3 gegenüber dem Unterteil 2 gedreht, bis der Bogen 9 in Richtung der Zugkraft weist. Zugleich wird die Anschlussöse 8 in ihre mit dem Ösenbogen 6 bestimmungsgemäße Scharnierposition gezogen.

Durch die beschriebenen Maßnahmen ist eine Verklankung der Anschlussöse 8 in oder an dem Ösenbogen 6 des Oberteils 3 wirksam vermieden.

In einigen Anwendungsfällen ist es erforderlich, dass der Anschlagpunkt zum Zwecke seiner Handhabung mit einer Zugkraft belastet wird, die quer zur Längsachse des Schraubbolzens wirkt. Dieses ist bei dem Anschlusspunkt 1 problemlos möglich, ohne befürchten zu müssen, dass sich in dieser Stellung die Anschlussöse 8 gegenüber dem Ösenbogen 6 festfrisst.

Zudem ist der in den Figuren dargestellte Anschlusspunkt 1 gegenüber anliegenden Querkräften besonders belastbar, ohne dass die Gefahr besteht, dass das Oberteil 3 aus dem Unterteil 2 herausgerissen wird. Erreicht wird dieses dadurch, dass der obere Abschluss des Unterteils 2 einen umlaufenden, in radialer Richtung vorspringenden Flansch 19 trägt. Dieser weist eine kreisrunde äußere Umrissgeometrie auf. Der Durchmesser des Flansches 19 entspricht bei dem dargestellten Ausführungsbeispiel dem Durchmesser des unteren Anlageflansches 20, der mit seiner Unterseite gegenüber die Oberfläche des handzuhabenden Gegenstandes verspannt wird. Dieser Flansch 19 wirkt in Bezug auf den oberen Abschluss des Unterteils 2 als verstärkender Ringkörper. Dieser gewährleistet, dass auf das Oberteil höhere Querkräfte eingeleitet werden können, ohne dass die Gefahr besteht, dass das Oberteil aus der Aufnahme des Unterteils herausgerissen wird oder die Aufnahme des Oberteils in dem Unterteil seitlich aufreißt.

Zum Befestigen des Unterteils 2 an einem handzuhabenden Gegenstand weist dessen radial äußere Mantelfläche Schlüsselflächen 21 auf. Diese sind bei dem dargestellten Ausführungsbeispiel nach Art eines Sechskants angeordnet. Der Flansch 19 überkragt die Schlüsselflächen 21 in radialer Richtung, sodass durch diese Maßnahme nicht nur eine wirksame Ausrisssicherung für das Oberteil 3 bereitgestellt ist, sondern zugleich eine wirksame Abrutschsicherung für ein Werkzeug, typischerweise ein Maulschlüssel, mit dem das Unterteil 2 des Anschlagpunktes 1 mit einem handzuhabenden Gegenstand verspannt wird, bereitgestellt.

Die Erfindung ist anhand eines Ausführungsbeispiels beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen dargelegt werden müsste.

### Bezugszeichenliste

- 1: Anschlagpunkt
- 2: Unterteil
- 3: Oberteil
- 4: Schraubbolzen
- 5: Gewindeabschnitt
- 6: Ösenbogen
- 7: Grundkörper
- 8: Anschlussöse
- 9: Bogen
- 10: Bogen
- 11, 11.1: Schenkel
- 12: Mittellängsebene
- 13, 13.1: Teilungselement
- 14: Bewegungsbegrenzungsanschlag
- 15: Bewegungsbegrenzungsanschlag
- 16: Vorsprung
- 17: Fläche
- 18: Mittellängsebene
- 19: Flansch
- 20: Anlageflansch
- 21: Schlüsselfläche
- I: Innenraum
- M: Mittelfaser

## Patentansprüche

1. Anschlagpunkt zum Festlegen an einem festzulegenden und/oder handzuhabenden Gegenstand, umfassend ein Anschlussmittel (4, 5) zum Anschließen des Anschlagpunktes (1) an einen festzulegenden und/oder handzuhabenden Gegenstand mit einen an einen Grundkörper (7) angeschlossenen Ösenbogen (6) und eine in den Ösenbogen (6) eingehängte Anschlussöse (8) zum Anschließen eines Anschlag- oder Zurrmittels, welche Anschlussöse (8) in ihrem in den Ösenbogen (6) eingehängten Bogen (10) einen kleineren Radius aufweist als in ihrem anderen Bogen (9) und welche Anschlussöse (8) zwei einander bezüglich ihrer Längsachse gegenüberliegende, in den von der Anschlussöse (8) eingefassten Innenraum (I) abragende Teilungselemente (13, 13.1) trägt, **dadurch gekennzeichnet, dass** die Anschlussöse (8) bezüglich ihrer Mittelfaser (M) den Teilungselementen (13, 13.1) gegenüberliegend jeweils außenseitig einen abragenden Bewegungsbegrenzungsanschlag (15) zum Begrenzen der Eintauchtiefe der Anschlussöse (8) in den Ösenbogen (6) zusammen mit den innenseitig abragenden, ebenfalls als Bewegungsbegrenzungsanschläge (14) ausgebildeten Teilungselementen (13, 13.1) trägt, durch welche Bewegungsbegrenzungsanschläge (14, 15) der Maximaldurchmesser des die Bewegungsbegrenzungsanschläge (14, 15) tragenden Abschnittes der Anschlussöse (8) größer ist als die lichte Weite des Ösenbogens (6) ist, wobei die die Bewegungsbegrenzungsanschläge (14, 15) bildende Kontur geformt ist, damit zwischen den Bewegungsbegrenzungsanschlägen (14, 15) und dem Ösenbogen (6) in der Anschlaganordnung im Wesentlichen nur ein Linienkontakt vorhanden ist.

2. Anschlagpunkt nach Anspruch 1, **dadurch gekennzeichnet, dass** zumindest eine der einander in der Anschlaganordnung kontaktierenden Anschlagkonturen des Ösenbogens (6) und der Bewegungsbegrenzungsanschläge (14, 15) der Anschlussöse (8) gerundet ausgeführt sind.

3. Anschlagpunkt nach Anspruch 1 oder 2, **dadurch gekennzeichnet, dass** der in den Innenraum (I) der Anschlussöse (8) abragende Bewegungsbegrenzungsanschlag (14) von dem jeweiligen Abschnitt der Anschlussöse (8) weiter abragt als der außenseitige Bewegungsbegrenzungsanschlag (15).

4. Anschlagpunkt nach einem der Ansprüche 1 bis 3, **dadurch gekennzeichnet, dass** die Bewegungsbegrenzungsanschläge (14, 15) im Endabschnitt der die beiden Bögen der Anschlussöse verbindenden Schenkel (11, 11.1) an ihrem zu dem Bogen (10) mit dem kleineren Radius weisenden Ende angeordnet sind.

5. Anschlagpunkt nach einem der Ansprüche 1 bis 4, **dadurch gekennzeichnet, dass** im Bereich der Bewegungsbegrenzungsanschläge (14, 15) die Querschnittsfläche des jeweiligen Abschnittes der Anschlussöse (8) nicht größer ist als in den daran angrenzenden Abschnitten der Anschlussöse (8).

6. Anschlagpunkt nach einem der Ansprüche 1 bis 5, **dadurch gekennzeichnet, dass** die beiden in einem Schenkel zueinander gehörigen Bewegungsbegrenzungsanschläge (14, 15) ineinander übergehen.

7. Anschlagpunkt nach Anspruch 6, **dadurch gekennzeichnet, dass** der Anschlussösenabschnitt im Bereich der einander innen- bzw. außenseitig gegenüberliegenden Bewegungsbegrenzungsanschläge eine einheitliche Querschnittsfläche aufweist.

8. Anschlagpunkt nach einem der Ansprüche 1 bis 7, **dadurch gekennzeichnet, dass** die die Bögen (9, 10) verbindenden Schenkel (11, 11.1) als gerade Schenkel ausgeführt sind.

9. Anschlussöse nach einem der Ansprüche 1 bis 7, **dadurch gekennzeichnet, dass** die die Bögen verbindenden Schenkel S-förmig geformt sind.

10. Anschlagpunkt nach einem der Ansprüche 1 bis 9, **dadurch gekennzeichnet, dass** der den Ösenbogen (6) tragende Grundkörper (7) das Oberteil (3) des Anschlagpunktes (1) bildet oder Teil eines solchen Oberteils ist, welches Oberteil (3) gegenüber einem das oder die Anschlussmittel (4, 5) tragenden Unterteil (2) drehbar ist.

11. Anschlagpunkt nach einem der Ansprüche 1 bis 10, **dadurch gekennzeichnet, dass** das Anschlussmittel des Anschlusspunktes (1) als Schraubbolzen (4, 5) ausgeführt ist.

## Claims

1. Attachment point for securing on an attachment point to be secured and/or handled, comprising a connection means (4, 5) for connecting the attachment point (1) to an object to be secured and/or handled, having an eyelet arc (6) connected to a main body (7) and a connection eyelet (8) mounted in the eyelet arc (6), for connecting an attachment or lashing means, which connection eyelet (8) has a smaller radius in its arc (10) mounted in the eyelet arc (6) than in its other arc (9), and which connection eyelet (8) carries two dividing elements (13, 13.1) that are located opposite one another with regard to their longitudinal axis and project into the interior (I) enclosed by the connection eyelet (8), **characterised in that** the connection eyelet (8) carries a movement limiting stop (15), projecting with regard to the central fibre (M) of said connection eyelet (8) and located opposite the dividing elements (13, 13.1) in each case on the outside, for limiting the introduction depth of the connection eyelet (8) into the eyelet arc (6) together with the internally projecting dividing elements (13, 13.1), which are likewise configured as movement limiting stops (14), as a result of which movement limiting stops (14, 15) the maximum diameter of that portion of the connection eyelet (8) that carries the movement limiting stops (14, 15) is greater than the clear width of the eyelet arc (6), wherein the contour forming the movement limiting stops (14, 15) is shaped in order that there is substantially only linear contact between the movement limiting stops (14, 15) and the eyelet arc (6) in the attachment arrangement.

2. Attachment point according to claim 1, **characterised in that** at least one of the attachment contours of the eyelet arc (6), contacting one another in the attachment arrangement, and the movement limiting stops (14, 15) of the connection eyelet (8), are configured as rounded.

3. Attachment point according to claim 1 or 2, **characterised in that** the movement limiting stop (14) projecting into the interior (I) of the connection eyelet (8) projects further from the respective section of the connection eyelet (8) than the movement limiting stop (15) on the outer side.

4. Attachment point according to any one of claims 1 to 3, **characterised in that** the movement limiting stops (14, 15) are arranged in the end section of the limbs (11, 11.1), connecting the two arcs of the connection eyelet, to the end facing towards the arc (10) with the smaller radius.

5. Attachment point according to any one of claims 1 to 4, **characterised in that,** in the region of the movement limiting stops (14, 15), the cross-section surface of the respective section of the connection eyelet (8) is not greater than in the adjacent sections of the connection eyelet (8).

6. Attachment point according to any one of claims 1 to 5, **characterised in that** the two movement limiting stops (14, 15) associated with one another in a limb merge into one another.

7. Attachment point according to claim 6, **characterised in that,** in the connection eyelet section comprises, in the region of the movement limitation, stops which are mutually opposed on the inside and outside respectively, and also comprises a uniform cross-section surface.

8. Attachment point according to any one of claims 1 to 7, **characterised in that** the limbs (11, 11.1) connecting the arcs (9, 10) are configured as straight limbs.

9. Attachment point according to any one of claims 1 to 7, **characterised in that** the limbs connecting the arcs are formed in an S-shape.

10. Attachment point according to any one of claims 1 to 9, **characterised in that** the basic body (7) carrying the eyelet arc (6) forms the upper part (3) of the attachment point (1), or is part of such an upper part, which upper part (3) can be rotated in relation to a lower part (2) carrying the connection means (4, 5).

11. Attachment point according to any one of claims 1 to 10, **characterised in that** the connection means of the attachment point (1) is configured as a screw bolt (4, 5).

## Revendications

1. Point d'attache destiné à être fixé à un objet à fixer et/ou à manipuler, comprenant un moyen de raccordement (4, 5) afin de raccorder le point d'attache (1) à un objet à fixer et/ou à manipuler, avec un arceau d'oeillet (6) raccordé à un corps de base (7) et un oeillet de raccordement (8) accroché dans l'arceau d'oeillet (6), destiné à raccorder un moyen d'attache et/ou d'arrimage, lequel oeillet de raccordement (8) présente à son arceau (10) accroché dans l'arceau d'oeillet (6) un rayon plus petit qu'à son autre arceau (9) et lequel oeillet de raccordement (8) supporte deux éléments de partage (13, 13.1), opposés l'un à l'autre par leur axe longitudinal, en saillie par rapport à l'espace intérieur (I) entouré par l'oeillet de raccordement (8), **caractérisé en ce que** l'œillet de raccordement (8) supporte, par rapport à sa fibre centrale (M), à l'opposé des éléments de partage (13, 13.1), sur chaque face extérieure, une butée de limitation de mouvement (15) en saillie, afin de limiter la profondeur d'enfoncement de l'œillet de raccordement (8) dans l'arceau d'oeillet (6), conjointement avec les éléments de partage (13, 13.1) en saillie vers l'intérieur, également conformés en tant que butées de limitation de mouvement (14), grâce auxquelles butées de limitation de mouvement (14, 15) le diamètre maximal du tronçon de l'œillet de raccordement (8) qui supporte les butées de limitation de mouvement (14, 15) est plus grand que la largeur d'ouverture de l'arceau d'oeillet (6), le contour formant les butées de limitation de mouvement (14, 15) étant moulé afin qu'entre les butées de limitation de mouvement (14, 15) et l'arceau d'oeillet (6) il n'y ait sensiblement qu'un contact de ligne lors d'un agencement d'attache.

2. Point d'attache selon la revendication 1, **caractérisé en ce qu'**au moins un des contours d'attache de l'arceau d'oeillet (6) et des butées de limitation de mouvement (14, 15) de l'œillet d'attache (8) qui se contactent lors d'un agencement d'attache, est conformé en arrondi.

3. Point d'attache selon la revendication 1 ou 2, **caractérisé en ce que** la butée de limitation de mouvement (14) en saillie vers l'espace intérieur (I) de l'œillet d'attache (8) est davantage en saillie par rapport au tronçon en question de l'œillet d'attache (8) que la butée de limitation de mouvement (15) sur la face extérieure.

4. Point d'attache selon l'une des revendications 1 à 3, **caractérisé en ce que** les butées de limitation de mouvement (14, 15) sont disposés dans le tronçon d'extrémité des montants (11, 11.1) reliant les deux arceaux de l'œillet d'attache, sur l'extrémité orientée vers l'arceau (10) au plus petit rayon.

5. Point d'attache selon l'une des revendications 1 à 4, **caractérisé en ce que** dans la zone des butées de limitation de mouvement (14, 15), la surface de section du tronçon en question de l'œillet d'attache (8) n'est pas plus grande que dans les tronçons voisins de l'œillet d'attache (8).

6. Point d'attache selon l'une des revendications 1 à 5, **caractérisé en ce que** les deux butées de limitation de mouvement (14, 15) allant de pair sur un montant, passent l'une dans l'autre.

7. Point d'attache selon la revendication 6, **caractérisé en ce que** le tronçon de l'œillet d'attache présente, dans la zone des butées de limitation de mouvement qui s'opposent sur la face intérieure ou extérieure, une surface de section homogène.

8. Point d'attache selon l'une des revendications 1 à 7, **caractérisé en ce que** les montants (11, 11.1) qui relient les arceaux (9, 10) sont conformés en montants rectilignes.

9. Point d'attache selon l'une des revendications 1 à 7, **caractérisé en ce que** les montants reliant les arceaux sont moulés en forme de S.

10. Point d'attache selon l'une des revendications 1 à 9, **caractérisé en ce que** le corps de base (7) supportant l'arceau d'oeillet (6) forme la partie supérieure (3) du point d'attache (1) ou fait partie d'une telle partie supérieure, laquelle partie supérieure (3) est rotative par rapport à une partie inférieure (2) supportant le ou les moyens de raccordement (4, 5).

11. Point d'attache selon l'une des revendications 1 à 10, **caractérisé en ce que** le moyen de raccordement du point d'attache (1) est conformé en boulon à visser (4, 5).
